# EUROPÄISCHE PATENTSCHRIFT

(11) **EP 1 145 617 B1**
(45) Veröffentlichungstag und Bekanntmachung des Hinweises auf die Patenterteilung: **08.12.2004**
(21) Anmeldenummer: 01108438.1
(22) Anmeldetag: 04.04.2001
(51) Int. Cl.: A01D 75/08, B24B 3/36

(54) **Schleifvorrichtung**
Sharpening device
Dispositif d'affûtage

(30) Priorität: 11.04.2000 DE 10017985
(43) Veröffentlichungstag der Anmeldung: 17.10.2001
(73) Patentinhaber: DEERE & COMPANY, Moline, Illinois 61265-8098 (US)
(72) Erfinder: Wolf, Helmut, 66482 Zweibrücken (DE)
(74) Vertreter: Holst, Sönke, Dr.

(56) Entgegenhaltungen:
- EP-A- 0 242 464
- DE-A- 4 133 043

## Beschreibung

Die Erfindung betrifft eine Schleifvorrichtung mit einem Schleifstein zum Schleifen eines Messers, einer Einrichtung zum Zustellen des Schleifsteins zum Messer und mit einer Steuerung.

In der DE 4133043 A ist eine Schneidemaschine beschrieben, deren Messer eine Schleifvorrichtung zugeordnet ist. Jeder Schneidevorgang wird von einem Zählwerk registriert und von der Anzahl der Schnitte wird der Schleifvorgang abhängig gemacht.

In der US 4834303 A ist eine Schleifeinrichtung für die Häckseltrommel eines selbstfahrenden Feldhäckslers beschrieben. In der Nähe des der Häckseltrommel zugewandten Endes des Schleifsteins ist ein Schalter angebracht, der durch die Schleifsteinhalterung betätigt wird, wenn der Schleifstein wegen übermäßiger Abnutzung nicht weiter zugestellt werden kann. Auf diese Weise erhält der Bediener einen Hinweis, den Schleifstein manuell näher an die Messer zu setzen. Neben den Kosten für den Schalter ist als nachteilig anzusehen, dass der Bediener erst dann über den verschlissenen Schleifstein informiert wird, wenn letzterer ausgetauscht werden muss.

Das der Erfindung zugrunde liegende Problem wird darin gesehen, eine verbesserte Schleifeinrichtung bereitzustellen.

Dieses Problem wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Es wird vorgeschlagen, die Schleifvorrichtung mit einer Steuerung zu versehen, die mit einem Zähler für die Anzahl der Zustellvorgänge ausgestattet ist. Über- oder unterschreitet der Stand des Zählers eine bestimmte Schranke, wird ein Signalwert erzeugt, der eine Information über den Verschleißgrad des Schleifsteins enthält. Der Signalwert kann den vollständigen Verschleiß des Schleifsteins bzw. das Erreichen eines bestimmten Abnutzungsgrads wiedergeben. Die Steuerung wird mit einer Information über die Anzahl der durchgeführten Zustellvorgänge versorgt. Sie kann eingerichtet sein, die Zustellung des Schleifsteins zu steuern; es ist aber auch eine separate Steuerung denkbar, die eingerichtet ist, die Anzahl der Zustellvorgänge mittels eines geeigneten Sensors zu erfassen. Ein derartiger Sensor kann ein Potentiometer des zum Verschieben des Schleifsteins dienenden (Linear-) Motors sein, das beim Zustellen eine bestimmte Stellung einnimmt. Die Steuerung kann auch mit einer Schleifeinrichtungssteuerung verbunden sein, die sie mit einer Information über die durchgeführten Zustellvorgänge versorgt.

Auf diese Weise erhält man eine Nachweiseinrichtung, die beim Erreichen eines Verschleißpunktes des Schleifsteins ein entsprechendes Signal abgibt.

Der Wert der Schranke, mit dem der Stand des Zählers verglichen wird, kann eine Information über die maximal mögliche bzw. einem bestimmten Abnutzungsgrad des Schleifsteins entsprechende Zahl der Zustellvorgänge enthalten. In diesem Fall wird der Zähler von einem Anfangswert, der in der Regel null ist, bei jedem Zustellvorgang um einen bestimmten Betrag hochgezählt. Der umgekehrte Fall, bei dem der Zähler von dem Wert der Schranke bei jedem Zustellvorgang um einen bestimmten Betrag heruntergezählt und mit dem Wert null (als Wert der Schranke) verglichen wird, ist ebenfalls denkbar. In der Regel wird die Zahl der Zustellvorgänge gezählt. Es sind jedoch beliebige andere mathematische Operationen, wie beispielsweise eine Berechnung der verbleibenden Länge des Schleifsteins, anwendbar.

Der Signalwert der Steuerung kann zum Ansteuern einer Anzeigeeinheit dienen, die einen Benutzer informiert, falls der Schleifstein nach Erreichen des Verschleißpunktes auszutauschen ist. Alternativ oder zusätzlich kann die Nachweiseinrichtung auch die Schleifvorrichtung derart steuern, dass ein Schleifen nur mit einem Schleifstein möglich ist, der seinen Verschleißpunkt noch nicht erreicht hat.

Es wäre auch denkbar, die Anzeigeeinheit mit einer anderen Information zu versorgen, die den Benutzer schon kurz vor Erreichen des Verschleißpunktes darüber informiert, dass der Schleifstein bald auszutauschen ist. Das kann über den Vergleich mit dem Wert einer entsprechenden Schranke erfolgen, die einen Abnutzungszustand des Schleifsteins repräsentiert, der kurz vor dem Verschleißpunkt liegt.

Beim Einbau eines neuen Schleifsteins kann der Stand des Zählers auf null bzw. einen der Anzahl möglicher Zustellvorgänge entsprechenden Wert gesetzt werden. Beim Zustellen wird der Stand des Zähler jeweils um 1 hoch- bzw. heruntergesetzt und die Steuerung vergleicht den Stand des Zählers mit dem Wert der Schranke (der der maximalen Anzahl an Zustellvorgängen entspricht) bzw. mit dem Wert null, um den Signalwert zu erzeugen. Der Anfangsstand des Zählers bzw. der Wert der Schranke ist vorzugsweise eingebbar, insbesondere entsprechend des Typs (Größe und Material) des Schleifsteins.

Das Aktualisieren des Standes des Zählers kann vor oder bei oder nach einem Schleifvorgang erfolgen.

Zweckmäßigerweise ist der Stand des Zählers und/oder der Wert der Schranke in einem nicht-flüchtigen Speicher abgelegt.

Die vorliegende Erfindung ist an einer Vielzahl von Einrichtungen mit zu schärfenden Messern verwendbar. Sie kann insbesondere an selbstfahrenden oder gezogenen Erntemaschinen mit Häckseltrommeln benutzt werden.

In den Zeichnungen ist ein nachfolgend näher beschriebenes Ausführungsbeispiel der Erfindung dargestellt. Es zeigt:
- Fig. 1: eine Erntemaschine mit einer Häckseltrommel mit Schleifvorrichtung in Seitenansicht und in schematischer Darstellung,
- Fig. 2: eine Seitenansicht einer Schleifvorrichtung in den während des Schleifens eingenommenen Endpositionen, und
- Fig. 3: ein Flussdiagramm, nach dem die Schleifvorrichtung gesteuert wird.

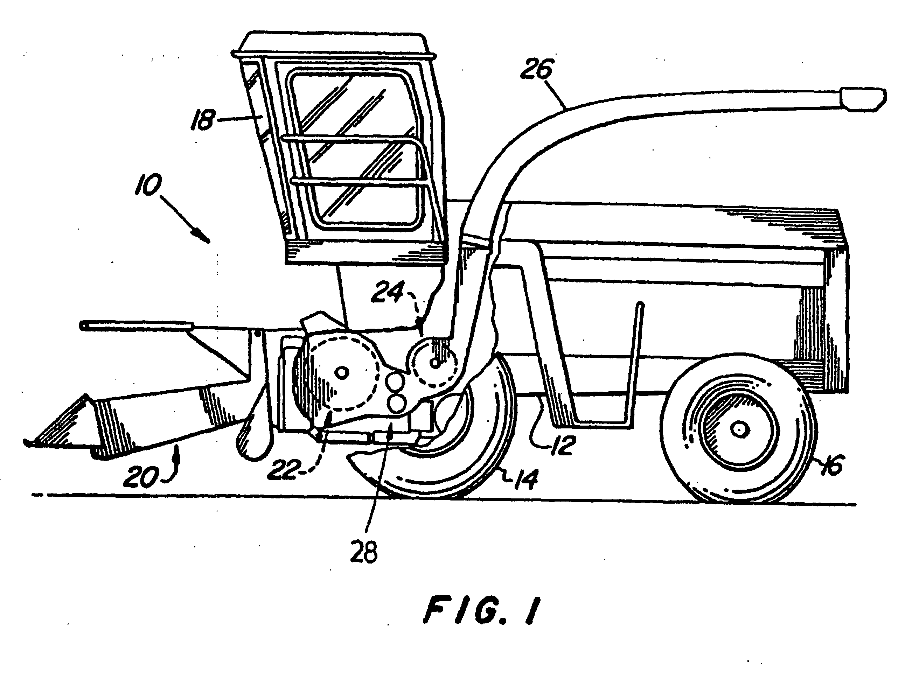

Eine in Figur 1 gezeigte Erntemaschine 10 in der Art eines selbstfahrenden Feldhäckslers baut sich auf einem Rahmen 12 auf, der von vorderen und rückwärtigen Rädern 14 und 16 getragen wird. Die Bedienung der Erntemaschine 10 erfolgt von einer Fahrerkabine 18 aus, von der aus eine Erntegutaufnahmevorrichtung 20 einsehbar ist. Mittels der Erntegutaufnahmevorrichtung 20 vom Boden aufgenommenes Gut, z. B. Mais, Gras oder dergleichen wird einer Häckseltrommel 22 zugeführt, die es in kleine Stücke häckselt und es einer Fördervorrichtung 24 aufgibt. Das Gut verlässt die Erntemaschine 10 zu einem nebenher fahrenden Anhänger über einen drehbaren Austragsschacht 26. Zwischen der Häckseltrommel 22 und der Fördervorrichtung 24 erstreckt sich eine Nachzerkleinerungsvorrichtung 28, durch die das zu fördernde Gut der Fördervorrichtung 24 tangential zugeführt wird.

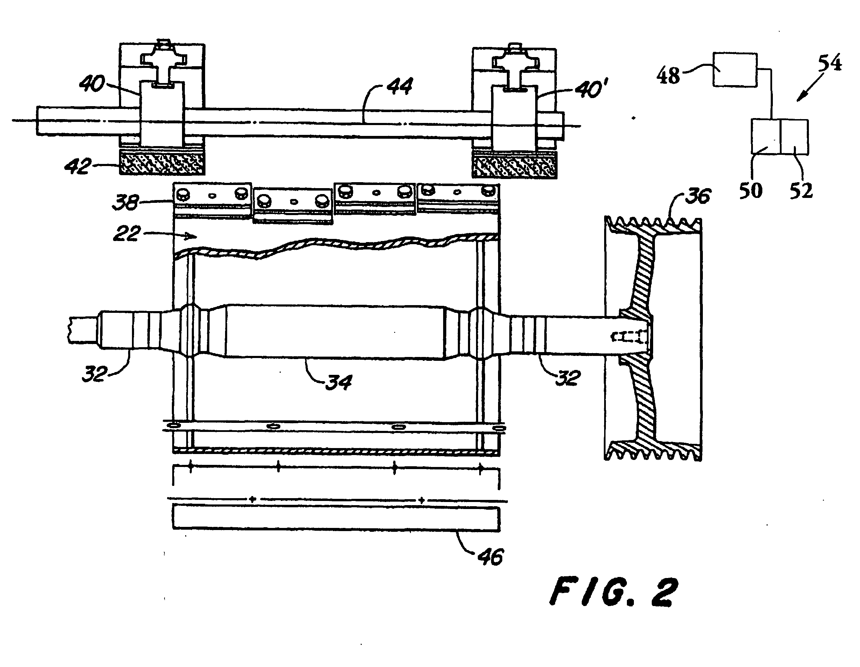

In Figur 2 ist schematisch eine Ansicht einer Häckseltrommel 22 und einer ihr zugeordneten Schleifvorrichtung wiedergegeben, wie sie sich bei einer Betrachtung der Erntemaschine 10 in Figur 1 (bezüglich der Bewegungsrichtung) von vorn ergibt. Die Häckseltrommel 22 weist eine Anzahl über ihre Breite und ihren Umfang verteilter Messer 38 auf, die in Zusammenwirken mit einem starren Gegenmesser 46 durch die Erntegutaufnahmeeinrichtung 20 aufgenommenes Erntegut zerteilen. Die Häckseltrommel 22 umfasst eine zentrale Welle 32, die über eine stirnseitige Riemenscheibe 36 und nicht dargestellte Riemen durch einen Motor der Erntemaschine 10 rotativ antreibbar ist. Die Welle 34 stützt sich durch zwei beidseits der Häckseltrommel 22 angeordnete Lager am Rahmen 12 der Erntemaschine 10 ab.

Um nach einer bestimmten Betriebsdauer die Messer 38 schärfen zu können, ohne die einzelnen Messer 38 oder die gesamte Häckseltrommel 22 ausbauen zu müssen, ist oberhalb der Häckseltrommel 22 nahe des von den Messern 38 beschriebenen Hüllkreises eine Schleifvorrichtung vorgesehen, die im wesentlichen einen Schleifstein 42, eine diesem zugeordnete Schleifsteinhalterung 40 und eine Achse 44 umfasst, auf der die Schleifsteinhalterung 40 verschiebbar gelagert ist.

Sollen die Messer 38 geschärft werden, wird die Häckseltrommel 22 in Rotation versetzt, in der Regel in umgekehrter Drehrichtung und/oder mit reduzierter Drehzahl, verglichen mit normalem Häckselbetrieb. Die Schleifsteinhalterung 40 mit dem daran befestigtem Schleifstein 42 wird aus einer (nicht eingezeichneten) Ruhe- oder Parkposition, in der sie seitlich neben der Häckseltrommel 22 angeordnet ist, über die gesamte Breite der Häckseltrommel 22 verschoben. Dabei ist die Unterseite des Schleifsteins 42 in Kontakt mit den Messern 38, und schärft sie. Beim Schleifvorgang wird der Schleifstein 42 mehrere Male über die Breite der Häckseltrommel 22 verfahren. Die Endpunkte dieser Verschiebebewegung sind in der Figur 2 durch die Schleifsteinhalterungen mit den Bezugsziffern 40 am linken Umkehrpunkt und 40' am rechten Umkehrpunkt dargestellt.

Zwischen den Verschiebebewegungen erfolgt ein Zustellen des Schleifsteins 42, also eine geringfügige Bewegung des Schleifsteins 42 auf die Messer 38 zu. Das Zustellen kann durch Verschieben des Schleifsteins 42 oder der ganzen Halterung erfolgen. Dazu kann ein separater Motor, insbesondere ein Elektro- oder Hydraulikmotor, eingesetzt werden. Auch ein mechanisches Element (Klinkenrad odgl.) ist verwendbar, das bei Erreichen eines oder beider Umkehrpunkte 40, 40' mit einem ortsfesten Element zusammenwirkt. Die Drehung des mechanischen Elements wird mittels eines Gewindes in eine Verschiebebewegung umgewandelt, so dass der Schleifstein 42 zugestellt wird und sich der Häckseltrommel 22 nähert. Dabei kann durch eine Verschiebung des Schleifsteins 42 über einen eingeschränkten seitlichen Verschiebebereich auf ein Zustellen verzichtet werden, da das mechanische Element dann nicht mit dem ortsfesten Element in Kontakt kommt. Ein derartiges Schleifen ohne Zustellen ist beim abschließenden Schlichten zweckmäßig. Die Schleifeinrichtung mit dem Schleifstein 42 wird durch eine in Figur 2 schematisch wiedergegebene Steuerung 48 gesteuert, die sowohl die Verschiebung des Schleifsteins 42 als auch sein Zustellen bewirkt. Die Steuerung 48 kann außerdem den Antrieb der Häckseltrommel 22 steuern. Sie ist mit einem (beim Abstellen der Erntemaschine 10 nicht-flüchtigen) Speicher 54 verbunden oder versehen, in dem in einem ersten Speicherbereich ein Zähler 50 und in einem zweiten Speicherbereich der Wert 52 einer Schranke abgespeichert ist.

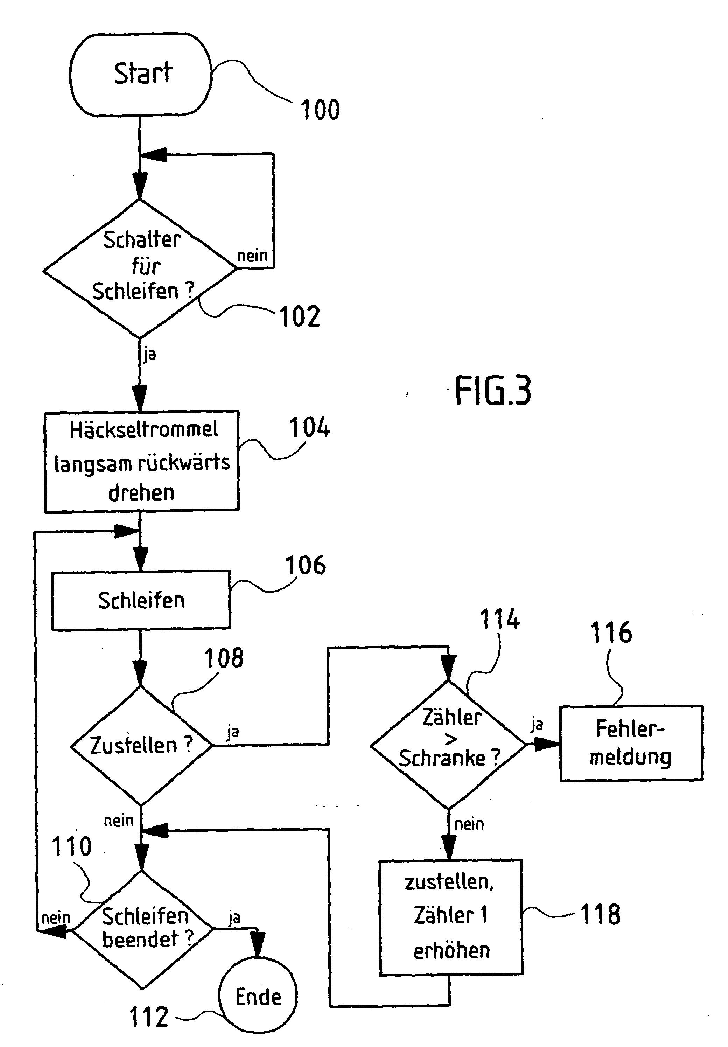

In Figur 3 ist ein Flussdiagramm wiedergegeben, nach dem die Steuerung 48 der Schleifeinrichtung vorgeht. Nach dem Start in Schritt 100, beispielsweise nach dem Anlassen des Motors des Feldhäckslers 10, wird in Schritt 102 abgefragt, ob ein entsprechender (Tast-) Schalter zum Aktivieren der Schleifeinrichtung betätigt ist oder nicht. (Denkbar wäre auch, die Messer 38 nach einer vorbestimmten Betriebsdauer selbsttätig zu schleifen.) Ist der Schalter nicht betätigt, folgt wieder Schritt 102. Anderenfalls folgt Schritt 104, in dem die Steuerung 48 den Antrieb der Häckseltrommel 22 veranlasst, letztere mit gegenüber dem normalen Häckselbetrieb verminderter Drehzahl in umgekehrter Richtung zu drehen. Sobald die Häckseltrommel 22 sich entsprechend dreht, beginnt der eigentliche Schleifvorgang. In Schritt 106 wird der Schleifstein 42 einmal oder mehrmals über die Breite der Häckseltrommel 22 verfahren und die Messer 38 werden geschliffen. In Schritt 108 wird abgefragt, ob ein Zustellen des Schleifsteins 42 erfolgen soll. Die Steuerung 48 ist mit einer geeigneten Datenbank, Tabelle odgl. versehen, anhand der erkennbar ist, nach wie vielen Verschiebevorgängen der Schleifstein 42 zugestellt wird. Auch eine manuelle Eingabe wäre denkbar. Entscheidet die Steuerung 48, dass kein Zustellen erforderlich ist, folgt Schritt 110, in dem abgefragt wird, ob das Schleifen beendet werden soll. Der Schleifvorgang wird in der Regel nach einer vorgegebenen Anzahl von Verschiebevorgängen beendet; denkbar wäre auch, diese Anzahl manuell einzugeben oder mit einem Schärfe-Sensor zu untersuchen, ob die Messer 38 hinreichend scharf sind. Soll das Schleifen beendet werden, folgt Schritt 112, in dem der Schleifvorgang beendet und die Routine verlassen, bzw. wieder Schritt 100 ausgeführt wird. Ist das Schleifen noch nicht zu beenden, folgt wieder Schritt 106.

Wird in Schritt 108 entschieden, dass ein Zustellen erfolgen soll, folgt Schritt 114, in dem abgefragt wird, ob der Stand des Zählers 50 größer als der Wert 52 einer vorgegebenen Schranke ist. Dieser Wert 52 der Schranke repräsentiert die maximale Anzahl an Zustellvorgängen, die ein Schleifstein 42 erlaubt. Der Wert 52 der Schranke kann vom Typ (insbesondere Abmessungen und Material) des Schleifsteins 42 abhängen. Zweckmäßigerweise wird der Wert 52 der Schranke beim Einbau eines Schleifsteins 42 anderen Typs durch den Bediener oder Monteur entsprechend geändert, was z. B. durch eine Eingabe in die Software der Steuerung 48 oder das Setzen entsprechender Schalter geschehen kann. Beim Einbau eines neuen Schleifsteins 42 wird auch der Zähler 50 wieder auf null gesetzt.

Ergibt die Abfrage in Schritt 114, dass der Stand des Zählers 50 größer als der Wert 52 der Schranke ist, folgt Schritt 116, in dem eine Fehlermeldung abgegeben wird. Ein Zustellvorgang ist dann nicht mehr möglich, da der Stand des Zählers 50 darauf hindeutet, dass der Schleifstein 42 zu weit abgenutzt ist, um weiter zugestellt zu werden. Eine Beschädigung der Messer 38 und/oder der Schleifsteinhalterung 40 wäre die nachteilige Folge. Der Bediener kann den Schleifvorgang dann abbrechen und einen neuen Schleifstein 42 anbringen. Denkbar wäre auch, eine zweite Fehlermeldung zu geben, die den Bediener bei einem bestimmten Abnutzungsgrad des Schleifsteins 42 darauf hinweist, dass bald ein neuer Schleifstein einzusetzen ist. Die zweite Fehlermeldung kann beispielsweise bei einem Stand des Zählers von 90 % des Werts der Schranke gegeben werden. Ist der Stand des Zählers 50 in Schritt 114 nicht höher als der Wert der Schranke 52, folgt Schritt 118, in dem ein Zustellvorgang erfolgt und der Zähler um 1 erhöht wird. Auf Schritt 118 folgt Schritt 110.

Anzumerken ist, dass der Zähler 50 alternativ beim Einbau eines neuen Schleifsteins 42 auf einen der Schranke entsprechenden Wert gesetzt und beim Zustellen um 1 erniedrigt werden könnte. Die Fehlermeldung in Schritt 116 erfolgt dann, wenn der Zähler 50 auf null steht. Weiterhin ist anzumerken, dass ein Verschieben des Schleifsteins 42 über die Breite der Häckseltrommel 22 nicht erforderlich ist, wenn er sich über ihre gesamte Breite erstreckt.

## Patentansprüche

1. Schleifvorrichtung, mit einem Schleifstein (42) zum Schleifen eines Messers (38), einer Einrichtung zum Zustellen des Schleifsteins (42) zum Messer (38) und mit einer Steuerung (48), **dadurch gekennzeichnet, dass** die Steuerung (48) betreibbar ist, den Stand eines Zählers (50) entsprechend der Anzahl der durchgeführten Zustellvorgänge zu verändern und den Stand des Zählers (50) mit dem Wert (52) einer Schranke zu vergleichen, um einen Signalwert zu erzeugen.

2. Schleifeinrichtung nach Anspruch 1, **dadurch gekennzeichnet, dass** der Wert (52) der Schranke und/oder ein Anfangswert des Zählers (50) eine Information über die maximal mögliche und/oder die einem bestimmten Abnutzungsgrad entsprechende Anzahl der Zustellvorgänge eines Schleifsteins (42) enthält.

3. Schleifvorrichtung nach Anspruch 1 oder 2, **dadurch gekennzeichnet, dass** die Steuerung (48) eingerichtet ist, entsprechend des Ergebnisses des Vergleichs ein Zustellen des Schleifsteins zu unterbinden und/oder eine Fehlermeldung zu geben.

4. Schleifvorrichtung nach einem der Ansprüche 1 bis 3, **dadurch gekennzeichnet, dass** die Steuerung (48) eingerichtet ist, den Stand des Zählers (50) mit dem Wert einer zweiten Schranke zu vergleichen, die einem bestimmten Abnutzungsgrad des Schleifsteins (42) entspricht.

5. Schleifeinrichtung nach einem der vorhergehenden Ansprüche, **dadurch gekennzeichnet, dass** die Steuerung eingerichtet ist, den Stand des Zählers beim Einbau eines unbenutzten Schleifsteins (42) auf null zu setzen, wobei der Wert (52) der Schranke der Anzahl möglicher Zustellvorgänge entspricht und der Stand des Zählers (50) entsprechend der Zahl der durchgeführten Zustellvorgänge erhöht wird.

6. Schleifeinrichtung nach einem der Ansprüche 1 bis 3, **dadurch gekennzeichnet, dass** die Steuerung eingerichtet ist, den Stand des Zählers beim Einbau eines frischen Schleifsteins (42) auf einen Wert zu setzen, der der Anzahl möglicher Zustellvorgänge entspricht und der Stand des Zählers (50) entsprechend der Zahl der durchgeführten Zustellvorgänge vermindert wird, wobei die Steuerung (48) eingerichtet ist, den Stand des Zählers (50) mit dem Wert null zu vergleichen.

7. Schleifeinrichtung nach einem der vorhergehenden Ansprüche, **dadurch gekennzeichnet, dass** der Wert (52) der Schranke oder der Anfangsstand des Zählers (50) eingebbar ist, insbesondere entsprechend des Typs des Schleifsteins (42).

8. Schleifvorrichtung nach einem der vorhergehenden Ansprüche, **dadurch gekennzeichnet, dass** die Steuerung (48) eingerichtet ist, den Stand des Zählers (50) vor oder bei oder nach einem Schleifvorgang zu ändern.

9. Schleifvorrichtung nach einem der vorhergehenden Ansprüche, **dadurch gekennzeichnet, dass** der Zähler (50) und/oder der Wert (52) der Schranke in einem nicht flüchtigen Speicher (54) abgelegt sind.

10. Erntemaschine, insbesondere selbstfahrender oder gezogener Feldhäcksler, mit einer Häckseltrommel (22) und einer Schleifvorrichtung nach einem der Ansprüche 1 bis 9.

## Claims

1. A sharpening device, with a grindstone (42) for sharpening a blade (3 8), a device for feeding the grindstone (42) up to the blade (38) and with a controller (48),
**characterized in that** the controller (48) is operable to change the state of a counter (50) in correspondence with the number of feed operations performed and to compare the state of the counter (50) with the value (52) of a limit, in order to generate a signal value.

2. A sharpening device according to claim 1, **characterized in that** the value (52) of the limit and/or the initial value of the counter (50) holds information regarding the maximum possible number, or the number corresponding to a specific degree of usage, of the feed operations of a grindstone (42).

3. A sharpening device according to claim 1 or 2, **characterized in that** the controller (48) is arranged to prevent feeding of the grindstone and/or issue an error signal in correspondence with the results of the comparison.

4. A sharpening device according to any of claims 1 to 3, **characterized in that** the controller (48) is arranged to compare the state of the counter (50) with the value of a second limit which corresponds to a specific degree of usage of the grindstone (42).

5. A sharpening device according to any of the preceding claims, **characterized in that** the controller is arranged to set the state of the counter to zero on installation of an unused grindstone (42), while the value (52) of the limit corresponds to the number of possible feed operations and the state of the counter (50) is increased in correspondence with the number of feed operations performed.

6. A sharpening device according to any of claims 1 to 3, **characterized in that** the controller is arranged to set the state of the counter on installation of a fresh grindstone (42) to a value which corresponds to the number of possible feed operations and the state of the counter (50) is reduced in correspondence with the number of feed operations performed, while the controller (48) is arranged to compare the state of the counter (50) with the value zero.

7. A sharpening device according to any of the preceding claims, **characterized in that** the value (52) of the limit or the starting state of the counter (50) can be entered, especially in correspondence with the type of the grindstone (42).

8. A sharpening device according to any of the preceding claims, **characterized in that** the controller (48) is arranged to alter the state of the counter (50) before, or at or after a grinding operation.

9. A sharpening device according to any of the preceding claims, **characterized in that** the counter (50) and/or the value (52) of the limit are entered in a non-volatile memory (54).

10. A harvesting machine, especially a self-propelled or towed forage harvester, with a chopper drum (22) and a sharpening device according to any of claims 1 to 9.

## Revendications

1. Dispositif d'affûtage avec une pierre à aiguiser (42) pour aiguiser une lame (38), un dispositif pour approcher la pierre à aiguiser (42) vers la lame (38) et avec une commande (48), **caractérisé en ce que** la commande (48) peut être activée pour modifier l'état d'un compteur (50) selon le nombre des opérations d'approche effectuées et pour comparer l'état du compteur (50) avec la valeur (52) d'une limite, en vue de produire une valeur de signal.

2. Dispositif d'affûtage selon la revendication 1, **caractérisé en ce que** la valeur (52) de la limite et/ou une valeur initiale du compteur (50) contient une information sur le nombre maximal possible et/ou le nombre correspondant à un degré d'usure déterminé des opérations d'approche d'une pierre à aiguiser (42).

3. Dispositif d'affûtage selon la revendication 1 ou 2, **caractérisé en ce que** la commande (48) est réglée pour faire cesser une approche de la pierre à aiguiser et/ou pour produire un message d'erreur en fonction du résultat de la comparaison.

4. Dispositif d'affûtage selon l'une quelconque des revendications 1 à 3, **caractérisé en ce que** la commande (48) est réglée pour comparer l'état du compteur (50) avec la valeur d'une deuxième limite, qui correspond à un degré d'usure déterminé de la pierre à aiguiser (42).

5. Dispositif d'affûtage selon l'une quelconque des revendications précédentes, **caractérisé en ce que** la commande est réglée pour ramener à zéro l'état du compteur lors du montage d'une pierre à aiguiser (42) sans usure, la valeur (52) de la limite correspondant au nombre des opérations d'approche possibles et l'état du compteur (50) étant augmenté de manière correspondante au nombre des opérations d'approche effectuées.

6. Dispositif d'affûtage selon l'une quelconque des revendications 1 à 3, **caractérisé en ce que** la commande est réglée pour ramener l'état du compteur, lors du montage d'une pierre à aiguiser fraîche (42), à une valeur qui correspond au nombre des opérations d'approche possibles et l'état du compteur (50) est réduit de façon correspondante au nombre des opérations d'approche effectuées, la commande (48) étant réglée pour comparer l'état du compteur (50) avec la valeur zéro.

7. Dispositif d'affûtage selon l'une quelconque des revendications précédentes, **caractérisé en ce que** la valeur (52) de la limite ou l'état initial du compteur (50) peut être entré(e), en particulier selon le type de la pierre à aiguiser (42).

8. Dispositif d'affûtage selon l'une quelconque des revendications précédentes, **caractérisé en ce que** la commande (48) est réglée pour modifier l'état du compteur (50) avant ou pendant ou après une opération d'affûtage.

9. Dispositif d'affûtage selon l'une quelconque des revendications précédentes, **caractérisé en ce que** le compteur (50) et/ou la valeur (52) de la limite sont stockés dans une mémoire non volatile (54).

10. Moissonneuse, en particulier ramasseuse-hacheuse autotractée ou tractée, avec un tambour hacheur (22) et un dispositif d'affûtage selon l'une quelconque des revendications 1 à 9.
